## Europäisches Patentamt

## European Patent Office

## Office européen des brevets

(11) Publication number: **0 190 775**
**B1**

# EUROPEAN PATENT SPECIFICATION

(45) Date of publication of the patent specification:
23.08.89

(21) Application number: **86200028.8**

(22) Date of filing: **09.01.86**

(51) Int. Cl.⁴: **B 24 B 23/04,** B 23 Q 11/00,
B 24 B 55/10

(54) Portable electrical polishing machine tool for the machining of surfaces of materials with simplified suction of the dust produced.

(30) Priority: **18.01.85 IT 2053785 U**

(43) Date of publication of application:
**13.08.86 Bulletin 86/33**

(45) Publication of the grant of the patent:
**23.08.89 Bulletin 89/34**

(84) Designated Contracting States:
**BE CH DE FR GB IT LI NL**

(56) References cited:
**DE-A-1 652 152**
**DE-A-2 907 930**
**DE-C-620 782**
**FR-A-2 113 500**
**FR-A-2 158 864**
**GB-A-2 142 261**
**US-A-2 774 199**
**US-A-3 902 284**
**US-A-3 938 283**

(73) Proprietor: **Valentini, Guido, Via Comelico, 2,**
**I-20135 Milano (IT)**

(72) Inventor: **Valentini, Guido, Via Comelico, 2, I-20135**
**Milano (IT)**

(74) Representative: **Mittler, Enrico, c/o Marchi &**
**Mittler s.r.l. Viale Lombardia, 20, I-20131 Milano**
**(IT)**

## Description

The present invention relates to an electrical portable polishing machine tool for the machining of surfaces of materials with simplified suction of the dust produced during the abrasion operative step.

Machine tools of this type are known, which essentially comprise a casing, enclosing a verticalaxis electrical motor, provided with a handle and assembled, by means of the interposition of elastic elements, on a polishing plate on which an abrasive sheet is positioned.

Said plate and said abrasive sheet are provided with a plurality of apertures for the passage and the suction of the dust created by the polishing action by the same abrasive sheet.

The motion of the polishing plate is accomplished, in a known way, by means of an eccentric element provided and fastened onto the shaft of the electrical motor, and guided inside the same plate, so as to obtain an orbital movement.

During the polishing operation, the dust produced tends to diffuse or to remain on the working surface, so disturbing the visibility of the piece being machined and polluting the working environment with considerable troubles for the operator.

To the purpose of obviating these drawbacks, it has already been proposed it to equip the polishing tool machines with a suction system to collect and carry far away the dust produced during the machining.

Such systems envisage e. g. suitable outer pipes with suction ports and suitable connectors for the connection to suction ducts incorporated in the machine.

As an instance, through the plurality of apertures provided in the polishing plate, dust is sucked towards a plurality of channels provided above the plate and inside the body of the machine towards a duct conveying them towards an outer suction means.

A so structured suction system has however the drawback of being depending on the outer suction means.

By envisaging on the contrary a fan keyed on the driving shaft as an aid for the suction, a better suction action is obtained, which is however constrained to the speed (rpm) of the same motor. This is the case of GB-A-2 142 261.

Object of the present invention is to provide a polishing tool machine equipped with a really efficient suction system, capable of withdrawing totally and quickly the dust as formed.

In view of this purpose according to the present invention an electrical portable polishing machine tool is accomplished for the machining of surfaces of materials, comprising a casing provided with a gripping handle, an electrical motor housed in said casing and provided with a vertical-axis output shaft, a polishing plate attached to said casing through interposed elastic elements and driven by said motor shaft to make orbital motion, an abrasive sheet placed on said polishing plate, said sheet and said plate being provided with respective pluralities of aligned apertures for dust passage, and a fan placed within a chamber included in a lower part of the casing within a chamber communicating both with said aligned apertures and with a discharge duct, characterized in that said chamber is arranged laterally with respect to the motor shaft and communicates with said discharge duct through a connecting duct extending laterally from said chamber and passing through said casing, and said fan is operatively controlled by said motor shaft through a transmission system designed to cause a turning speed of said fan greater than that of said motor shaft.

The structural and functional characteristics of a machine according to the present invention shall be better understood from the following exemplifying and not limitative disclosure, referred to the attached schematic drawings, wherein:

Figure 1 is a side elevation view of a machine according to the invention,

Fig. 2 is an elevation view equivalent to that of fig. 1, partly in section,

Fig. 3 is a sectional view according to the line III-III of fig. 1, and

Fig. 4 is a sectional view according to the line IV-IV of fig. 1.

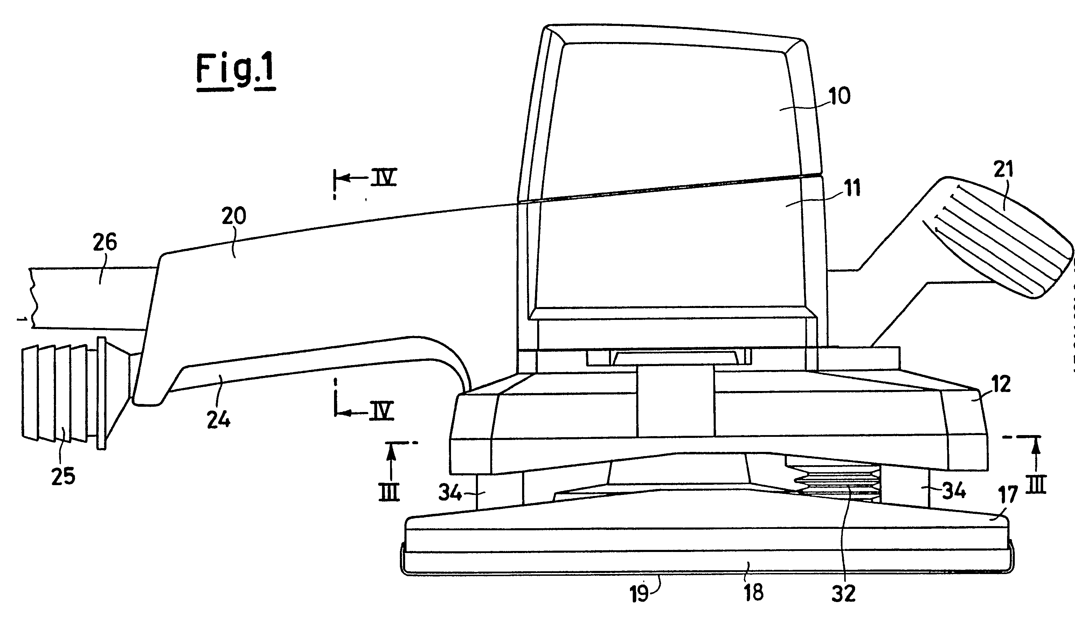

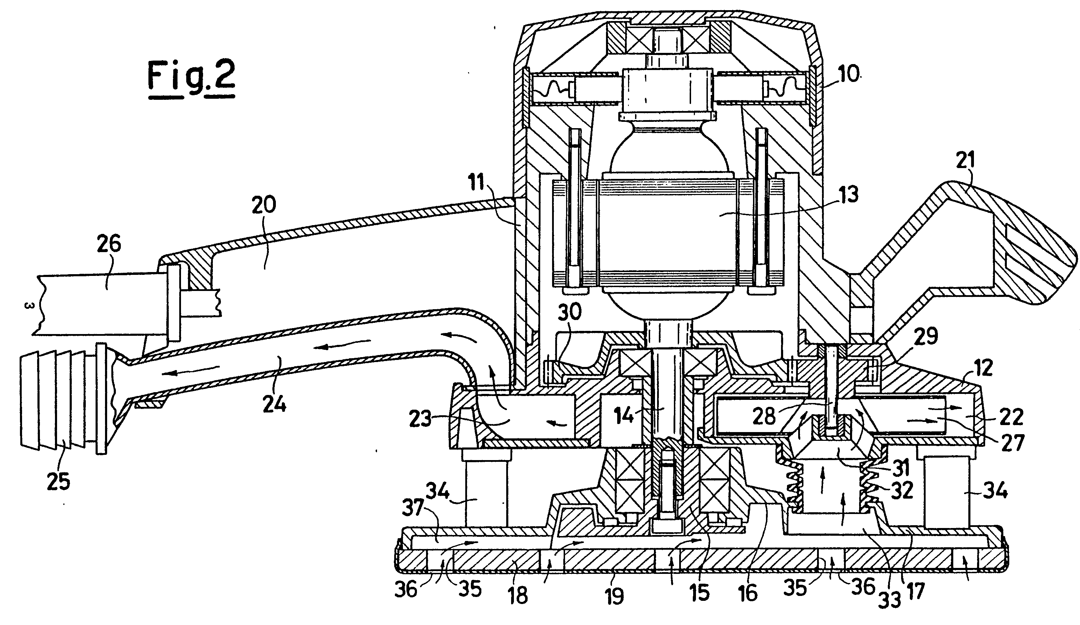

As shown in fig. 1 and 2, an electrical portable polishing machine comprises essentially a casing formed by an upper cap 10, by a central portion 11 and by a lower portion 12, rigidly linked to each other so as to constitute a single body supporting a vertical-axis electrical motor 13.

The shaft 14 of said motor 13 bears solidly constrained and operatively linked thereto an eccentric element 15, acting within a complementary seat 16 of a covering portion 17 for a polishing plate 18 onto which an abrasive sheet 19 is positioned and fastened in a known fashion.

From the central portion 11 protrude: on one side a gripping handle 20 and on the other side a gripping and pressure-exerting element 21.

In the lower portion a lateral chamber 22 is provided, from which a duct 23 extends, which is operatively connected with a discharge tubular element 24, ending into a connector or fitting 25 said tubular element 24 constituting the lower portion of the gripping handle 20.

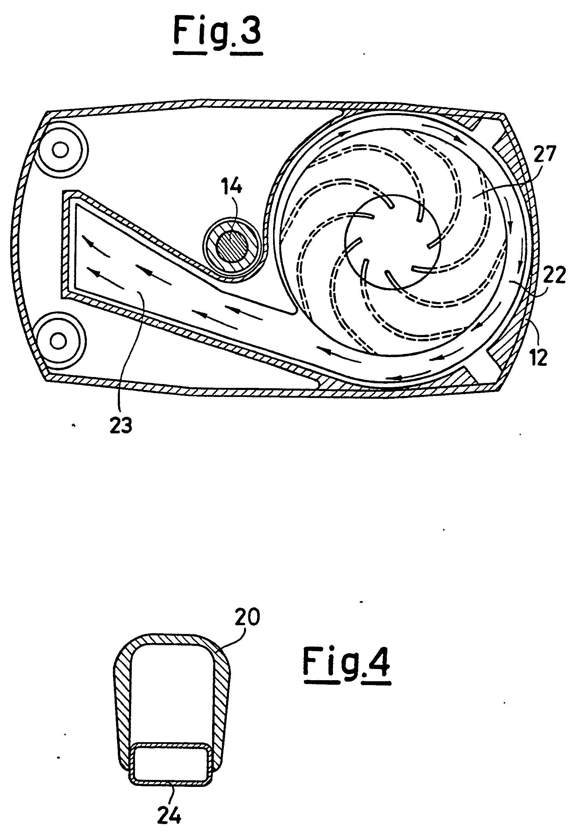

Said gripping handle 20 indeed, essentially having a reversed-U shape (fig. 4), is closed by said tubular element 24, and houses additionally a cable 26 for the feeding of the motor 13.

The construction of the gripping handle 20, including the tubular element 24, is the subject matter of the copending divisional application No. 37 200 1326.

The chamber 22 contains a fan 27 which receives its rotary motion from a shaft 28 solid with a first gear wheel 29, operatively coupled to and driven for rotaton by a second gear wheel 30 keyed onto the shaft 14 of the motor 13.

Said chamber 22 is provided in its lower portion with an aperture 31 connected, via an elastic bellows-shaped element 32, with a port 33 provided in the upper portion of the cover 17 of the polishing plate 18.

Between said lower portion 12 and said cover 17 there are a plurality of column-shaped elastic elements 34, suitable to allow the orbital motion of the same plate and to prevent it from rotating.

The polishing plate 18 is provided with a plurality of apertures 35 aligned with corresponding apertures 36 provided in the abrasive sheet 19.

Said plurality of apertures are connected to a chamber 37 defined between said cover and said plate, and connected with the port 33.

When the electrical polishing machine comes in contact with the surface of the material to be polished, the orbital movement of the polishing plate 18 and of the related abrasive sheet 19 positioned onto it cause the formation of dust.

The dust formed is sucked, according to the arrows of fig. 2, from the apertures 36, 35, passes into the chamber 37 and through the port 33, the bellows 32 and the aperture 31 and comes into the chamber 22 wherein the fan 27 is housed.

From said chamber the dust is then sent through the duct 23 and the tubular element 24 to a collecting means, which may be either positioned solid with the connector 25 or placed in a remote site and connected with it via a flexible pipe, not shown.

It results particularly advantageous the provision of the two gear wheels 29, 30, or of whatever other couple of kinematic elements, such as e.g., toothed wheels or pulleys with related transmission belts, such as to allow the fan 27 to turn at a higher speed than the motor 13, thus allowing a considerable suction.

Advantageously, the greater or lesser adhesion between the abrasive sheet and the material under machining, by influencing the motor speed, causes consequently an equal adjustment of the turning speed of the fan 27, thus varying the suction efficiency.

It is also advantageous to note that the tubular element 24, besides acting as suction duct, performs the function of lower closure of the gripping handle 20 and is hence suitable to be easily fitted to it.

## Claims

1. Electrical portable polishing machine tool for the machining of surfaces of materials, comprising a casing (10, 11, 12) provided with a gripping handle (20), an electrical motor (13) housed in said casing (10, 11, 12) and provided with a vertical-axis output shaft (14), a polishing plate (18) attached to said casing (10, 11, 12) through interposed elastic elements (34) and driven by said motor shaft (14) to make orbital motion, an abrasive sheet (19) placed on said polishing plate (18), said sheet (19) and said plate (18) being provided with respective pluralities of aligned apertures (36, 35) for dust passage, and a fan (27) placed within a chamber (22) included in a lower part (12) of the casing (10, 11) and communicating both with said aligned apertures (36, 35) and with a discharge duct (24), characterized in that said chamber (22) is arranged laterally with respect to the motor shaft (14) and communicates with said discharge duct (24) through a connecting duct (23) extending laterally from said chamber (22) and passing through said casing (10, 11), and said fan (27) is operatively controlled by said motor shaft (14) through a transmission system (29, 30) designed to cause a turning speed of said fan (27) greater than that of said motor shaft (14).

2. Machine tool according to claim 1, characterized in that said transmission system (29, 30) is formed by two gear wheels (29, 30).

3. Machine tool according to claim 2, characterized in that a first gear wheel (29) is keyed on an idle shaft (28) having said fan (27) keyed thereon, said first gear wheel (29) being engaged with a second gear wheel (30) keyed on said motor shaft (14).

## Revendications

1. Machine-outil electrique et portable de ponçage pour l'usinage de surfaces de matériaux, comportant une enveloppe (10, 11, 12) munie d'une poignée (20), un moteur électrique (13) logé dans ladite enveloppe (10, 11, 12) et muni d'un arbre de sortie vertical (14), une plaque (18) de ponçage fixée à ladite enveloppe (10, 11, 12) par l'intermédiaire d'éléments élastiques interposés (14) et entraînée par ledit arbre du moteur (14) de façon à effectuer un mouvement orbital, une feuille abrasive (19) placée sur ladite plaque (18) de ponçage, ladite feuille (19) et ladite plaque (18) comportant des pluralités respectives d'ouvertures alignées (36, 35) destinées à laisser passer la poussière, et une soufflante (27) placée à l'intérieur d'une chambre (22) ménagée dans une partie inférieure (12) de l'enveloppe (10, 11) et communiquant à la fois avec lesdites ouvertures (36, 35) et avec un conduit d'évacuation (24), caractérisée en ce que ladite chambre (22) est disposée latéralement par rapport à l'arbre (14) du moteur et communique avec ledit conduit d'évacuation (24) par l'intermédiaire d'un conduit de liaison (23) s'étendant latéralement à partir de ladite chambre (22) et passant à travers ladite enveloppe (10, 11) et en ce que ladite soufflante (27) est commandée, en fonctionnement, par ledit arbre (14) du moteur par l'intermédiaire d'un système de transmission (29, 30) conçu pour faire en sorte que la vitesse de rotation de ladite soufflante (27) soit supérieure à celle dudit arbre (14) du moteur.

2. Machine-outil selon la revendication 1, caractérisée en ce que ledit système de transmission (29, 30) est formé de deux roues dentées (29, 30).

3. Machine-outil selon la revendication 2, caractérisée en ce qu'une première roue dentée (29) est calée sur un arbre (28) tournant fou sur lequel est également calée ladite soufflante (27), ladite première roue dentée (29) étant en prise avec une deuxième roue dentée (30) calée sur ledit arbre (14) du moteur.

## Patentansprüche

1. Elektrische Handschleif-Werkzeugmaschine für die spanende Bearbeitung von Materialoberflächen, mit einem einen Handgriff (20) aufweisenden Gehäuse (10, 11, 12), einem Elektromotor (13), der in dem Gehäuse (10, 11, 12) untergebracht ist und mit einer Ausgangswelle (14) mit senkrechter Achse versehen ist, einer Schleifplatte (18) die unter Zwischenschaltung elastischer Elemente (34) an dem Gehäuse (10, 11, 12) angebracht ist und durch die Motorwelle (14) zur Ausführung einer Rotationsbewegung angetrieben wird, einem auf der Schleifplatte (18), angeordneten Schleif-Flachstück (19), wobei das Flachstück (19) und die Platte (18) jeweils mit einer Mehrzahl miteinander ausgerichteter Öffnungen (36, 35) für den Durchtritt von Staub versehen sind, und mit einem Gebläse (27), das innerhalb einer in einem unteren Teil (12) des Gehäuses (10, 11) vorhandenen Kammer (22) angeordnet ist, die sowohl mit den miteinander ausgerichteten Öffnungen (36, 35) als auch mit einem Abführkanal (24) kommuniziert, dadurch gekennzeichnet, daß die Kammer (22) in bezug auf die Motorwelle (14) seitlich angeordnet ist und mit dem Abführkanal (24) über einen Verbindungskanal (23) kommuniziert, der sich von der Kammer (22) seitlich wegerstreckt und durch das Gehäuse (10, 11) verläuft, und daß das Gebläse (27) von der Motorwelle (14) über ein (Kraft-)Übertragungssystem (29, 30) betriebsmäßig gesteuert wird, das dazu ausgelegt ist, eine höhere Rotationsgeschwindigkeit des Gebläses (27) als die der Motorwelle (14) hervorzurufen.

2. Werkzeugmaschine nach Anspruch 1, dadurch gekennzeichnet, daß das (Kraft-)Übertragungssystem (29, 39) durch zwei Zahnräder (29, 30) gebildet ist.

3. Werkzeugmaschine nach Anspruch 2, dadurch gekennzeichnet, daß ein erstes Zahnrad (29) auf einer leerlaufenden Welle (28) verkeilt ist, auf der das Gebläse (27) verkeilt ist, und daß das erste Zahnrad (29) mit einem auf der Motorwelle (14) verkeilten zweiten Zahnrad (30) in Eingriff steht.

Fig.1

EP 0 190 775 B1

Fig.2

EP 0 190 775 B1

# Fig.3

# Fig.4